(19) Europäisches Patentamt European Patent Office Office européen des brevets

(11) **EP 3 993 247 B1**

(12) **EUROPEAN PATENT SPECIFICATION**

(45) Date of publication and mention
of the grant of the patent:
**20.08.2025 Bulletin 2025/34**

(21) Application number: **21205551.1**

(22) Date of filing: **29.10.2021**

(51) International Patent Classification (IPC):
*H02M 5/458* (2006.01)    *H02M 7/48* (2007.01)
*H02M 7/49* (2007.01)    *H02M 1/12* (2006.01)
*H02P 25/22* (2006.01)

(52) Cooperative Patent Classification (CPC):
**H02M 7/49; H02M 1/12; H02M 5/458;
H02M 5/4585; H02M 7/48; H02P 25/22;
H02P 29/028**

(54) **AC-AC CONVERTER**

AC-AC-WANDLER

CONVERTISSEUR CA-CC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2020 JP 2020182819**

(43) Date of publication of application:
**04.05.2022 Bulletin 2022/18**

(73) Proprietor: **Nabtesco Corporation
Tokyo 102-0093 (JP)**

(72) Inventor: **ONO, Yasuo
Chiyoda-ku, Tokyo (JP)**

(74) Representative: **Grünecker Patent- und
Rechtsanwälte
PartG mbB
Leopoldstraße 4
80802 München (DE)**

(56) References cited:
EP-A1- 3 048 718    WO-A1-2018/025416
CN-A- 109 617 426    JP-A- 2012 044 830
JP-A- 2020 137 408    US-A1- 2008 012 538
US-A1- 2008 055 947    US-A1- 2016 065 056

• SALMON J C: "RELIABLE 3-PHASE PWM BOOST
RECTIFIERS EMPLOYING A STACKED DUAL
BOOST CONVERTER SUBTOPOLOGY", IEEE
TRANSACTIONS ON INDUSTRY APPLICATIONS,
IEEE SERVICE CENTER, PISCATAWAY, NJ, US,
vol. 32, no. 3, 1 May 1996 (1996-05-01), pages 542
- 551, XP000598106, ISSN: 0093-9994, DOI:
10.1109/28.502165
• NISHIO MOTOKI ET AL: "Single-Phase to Three-
Phase Electrolytic Capacitor-Less Dual Inverter-
Fed IPMSM for Suppress Torque Pulsation",
IEEE TRANSACTIONS ON INDUSTRIAL
ELECTRONICS, IEEE SERVICE CENTER,
PISCATAWAY, NJ, USA, vol. 68, no. 8, 10 June
2020 (2020-06-10), pages 6537 - 6546,
XP011852609, ISSN: 0278-0046, [retrieved on
20210430], DOI: 10.1109/TIE.2020.3000091

## Description

The present invention relates to an AC-AC converter.

Three-phase motors are widely used in industrial equipment such as fans, pumps, and FA equipment. A motor drive system for driving such a three-phase motor generally includes an AC-AC converter consisting of a rectifier circuit that rectifies a three-phase AC voltage so as to generate a DC voltage (rectified voltage), a subsequent DC link, and an inverter circuit that generates a three-phase AC voltage from a DC link voltage.

Patent Literature 1 describes converters for high power applications, in particular, so-called hexagram converters. Embodiments comprise a plurality of rectifiers and inverters connected via DC links.

Patent Literature 2 describes coil switching of an electric generator, in particular, for a wave energy converter. Depending on an output voltage, windings are reconfigured. In particular, this is done between a "wye" (star) and a "delta" configuration.

Non-patent Literature 2 describes circuit topologies for 3-phase PWM boost rectifiers.

Patent Literature 3 describes to a power conversion device comprising a single-phase voltage rectifier and an inverter connected via a DC link.

Patent Literature 4 describes a combination of a single-phase rectifier and an inverter as well.

Non-patent Literature 3 shows plural examples of similar topologies as in Patent Literature 3 and 4.

Patent Literature 5 describes a motor driving device having a first and a second three-phase coil that are connected to a first and a second inverter, respectively.

Patent Literature 6 describes an electric motor driving device for a three-phase mode or having a two inverter configuration and being switchable between a one-side drive and a 2-side drive configuration.

| [Patent Literature 1] | US 2008/055947 A1 |
|---|---|
| [Patent Literature 2] | US 2008/012538 A1 |
| [Patent Literature 3] | EP 3 048 718 A1 |
| [Patent Literature 4] | JP 2012-44830 A |
| [Patent Literature 5] | WO 2018/025416 A1 |
| [Patent Literature 6] | JP 2020-137408 A |

[Non-patent Literature 1] M. Guacci, D. Bortis, and J.W. Kolar, "High-Efficiency Weight-Optimized Fault-Tolerant Modular Multi-Cell Three-Phase GaN Inverter for Next Generation Aerospace Applications," in Proc. of IEEE Energy Conversion Congress and Application (ECCE-USA), Portland, OR, USA, Sept. 2018, pp.1334-1341.

[Non-patent Literature 2] John C.Salmon, "Reliable 3-Phase PWM Boost Rectifiers Employing a Stacked Dual Boost Converter Subtopology", IEEE Transactions on Industry Applications, vol. 32, no. 3., 1 May 1996, pp. 542-551.

[Non-patent Literature 3] N. Motoki et al., "Single-Phase to Three-Phase Electrolytic Capacitor-Less Dual Inverter-Fed IPMSM for Suppress Torque Pulsation", IEEE Transactions on Industry Applications, vol. 68, no. 8, 10 June 2020, pp 6537-6546.

In a motor drive system, it is required that the entire system can be miniaturized and made denser for the purpose of allowing for the use of low voltage resistant elements, the reduction in design man-hours, and the commonization of components. As one of the technologies that realize this, the motor is configured to include a modular motor that is independent for each segment of a three-phase winding, and in order to drive each segment for each modular, "modular motor drive (MMD) system" has been proposed in which an inverter circuit is modularized (see, for example, Non-patent Literature 1). However, in this type of MMD, although the inverter circuit is modularized, the rectifier circuit is not modularized. In this case, since a high voltage resistant semiconductor element is required for the rectifier circuit, miniaturization and densification of the entire motor drive system are difficult. Further, in this MMD, the fault tolerance of the rectifier circuit is not taken into consideration, and there is a problem that the motor cannot be driven in the case of failure of the rectifier circuit.

As described, conventional rectifier circuits have a problem that fault tolerance in the case of failure of a rectifier circuit cannot be realized in addition to a problem that miniaturization and densification of a motor drive system cannot be sufficiently achieved. In this background, a purpose of the present invention is to achieve a fault tolerant motor drive system.

Means for Solving the Problem

The invention is defined by the features of claim 1. The dependent claims recite advantageous embodiments of the invention.

An AC-AC converter according to the present invention includes: n single-phase rectifier circuit modules, where n is a multiple of three, that convert an AC voltage of each phase of a three-phase AC input voltage supplied from a three-phase AC power supply into a DC voltage, the n single-phase rectifier circuit modules being connected to one another using a delta connection or a star connection; the same number of inverter circuit modules as the single-phase rectifier circuit modules that convert the DC voltage into a three phase AC output voltage; and controllers that control switching elements constituting the single-phase rectifier circuit modules and the inverter circuit modules such that when any one of the n single-phase rectifier circuit modules fails, the inverter circuit modules connected to the remaining single-phase rectifier circuit modules and the one of the single-phase rectifier circuit modules evenly output three-phase AC output voltage.

The AC-AC converter according to the invention includes a switching unit that switches between the delta connection and the star connection of the single-phase rectifier circuit modules, in accordance with a magnitude of the AC input voltage.

The ratio between a power supply voltage of the three-phase AC power supply and the maximum DC link voltage is denoted by R. At this time, the switching unit switches the single-phase rectifier circuit modules to the delta connection when R is smaller than a predetermined value and switches the single-phase rectifier circuit modules to the star connection when R is equal to or more than the predetermined value.

The value of R may be in the range of $1/\sqrt{3} \pm 5\%$.

The value of R may be $1/\sqrt{3}$.

The controllers may control the switching elements constituting the single-phase rectifier circuit modules and the inverter circuit modules such that the phase of a three-phase input current that is input from the three-phase AC power supply and the phase of the three-phase AC input voltage match while keeping the DC voltage constant.

The controllers calculate target capacitor power based on the difference between a DC link voltage of a DC link provided on the downstream side of the single-phase rectifier circuit modules and a target link voltage, calculate target motor power for outputting power to an external motor by subtracting the target capacitor power from target DC power, and control the switching elements constituting the single-phase rectifier circuit modules and the inverter circuit modules such that the pulsation of three-phase AC power related to the three-phase AC input voltage and the pulsation of DC power related to the DC voltage are absorbed by using a load of the external motor based on the target capacitor power and the target motor power.

The DC link may include a capacitor. At this time, the capacitor may absorb the pulsation of the three-phase AC power related to the three-phase AC input voltage and the pulsation of the DC power related to the DC voltage.

The controllers may control the switching elements constituting the single-phase rectifier circuit modules and the inverter circuit modules such that input power from the three-phase AC power supply is evenly distributed to all the single-phase rectifier circuit modules.

The controllers may control the switching elements constituting the single-phase rectifier circuit modules and the inverter circuit modules such that input power from the three-phase AC power supply is distributed to the single-phase rectifier circuit modules at different ratios.

The controllers may calculate the power voltage of each phase of the three-phase AC power supply and control the switching elements constituting the single-phase rectifier circuit modules and the inverter circuit modules such that the amount of power distributed to the single-phase rectifier circuit modules that correspond to a phase with a high power supply voltage is larger than the amount of power distributed to the single-phase rectifier circuit modules that correspond to a phase with a low power supply voltage.

Optional combinations of the aforementioned constituting elements, and implementations of the invention in the form of methods, apparatuses, programs, transitory or non-transitory storage media, systems, and the like may also be practiced as additional modes of the present invention.

Effect of the Invention

According to the present invention, it is possible to achieve a miniaturized and densified fault tolerant motor drive system.

Embodiments will now be described by way of examples only, with reference to the accompanying drawings which are meant to be exemplary, not limiting and wherein like elements are numbered alike in several Figures in which:

FIG. 1 is a functional block diagram of a deltaconnected AC-AC converter according to the first embodiment;
FIG. 2 is a functional block diagram of a starconnected AC-AC converter according to the first embodiment;
FIG. 3 is a diagram showing a state when one of single-phase rectifier circuit modules fails in the AC-AC converter of FIG. 1;
FIG. 4 is a diagram showing a state when one of single-phase rectifier circuit modules fails in the AC-AC converter of FIG. 2;
FIG. 5 is a functional block diagram of an AC-AC converter at the time of a delta connection according to the second embodiment;
FIG. 6 is a functional block diagram of an AC-AC converter at the time of a star connection according to the second embodiment;
FIG. 7 is a graph of a rectifier circuit input voltage, a modulation factor, and a rectifier circuit input current with respect to a power supply voltage; and
FIG. 8 is a functional block diagram of a controller in an AC-AC converter according to the fourth embodiment.

Hereinafter, the present invention will be described based on preferred embodiments with reference to the drawings. The embodiments do not intend to limit the scope of the invention but exemplify the invention. Not all of the features and the combinations thereof described in the embodiments are necessarily essential to the invention. The same or equivalent constituting elements, members, and processes illustrated in each drawing shall be denoted by the same reference numerals, and duplicative explanations will be omitted appropriately. The scales and shapes shown in the figures are defined for convenience's sake to make the explanation easy and shall not be interpreted limitatively unless otherwise specified. Terms like "first", "second", etc., used in the specification and claims do not indicate an order or importance by any means unless specified otherwise and are used to distinguish a certain feature from the others. Some of the components in each figure may be omitted if they are not important for explanation.

[First Embodiment]

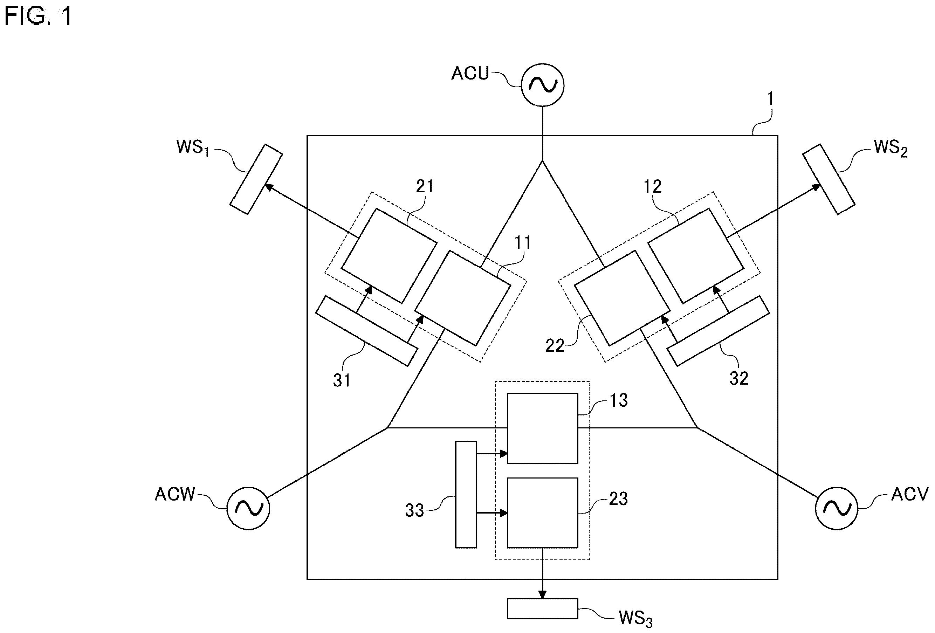

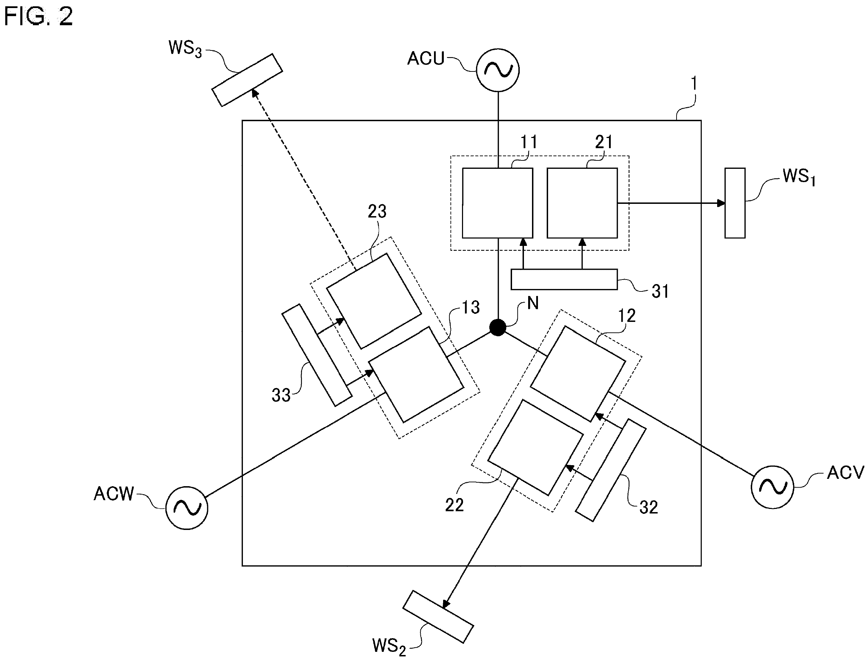

FIGS. 1 and 2 are functional block diagrams of an AC-AC converter 1 according to the first embodiment. The AC-AC converter 1 includes single-phase rectifier circuit modules 11, 12, and 13, inverter circuit modules 21, 22, and 23, and controllers 31, 32, and 33. That is, the rectifier circuit of the AC-AC converter 1 is modularized by the single-phase rectifier circuit modules 11, 12, and 13. The inverter circuit of the AC-AC converter 1 is modularized by the inverter circuit modules 21, 22, and 23. Each of the single-phase rectifier circuit modules 11, 12, and 13 is, for example, a single-phase bridge circuit configured by using a switching element and includes two input terminals and two output terminals. Each of the inverter circuit modules 21, 22, and 23 is, for example, a three-phase bridge circuit configured by using a switching element and includes two input terminals and three output terminals. As described above, in the AC-AC converter 1, since both the rectifier circuit and the inverter circuit are modularized, the entire motor drive system can be configured in a small size and with high density.

The single-phase rectifier circuit module 11 is connected to a U-phase output terminal ACU of a three-phase AC power supply such as a commercial power supply and converts a U-phase single-phase AC voltage $v_U$ supplied from the output terminal ACU into a DC voltage. The single-phase rectifier circuit module 12 is connected to a V-phase output terminal ACV of the above-mentioned three-phase AC power supply and converts a V-phase single-phase AC voltage $v_V$ supplied from the output terminal ACV into a DC voltage. The single-phase rectifier circuit module 13 is connected to a W-phase output terminal ACW of the above-mentioned three-phase AC power supply and converts a W-phase single-phase AC voltage $v_W$ supplied from the output terminal ACW into a DC voltage. The single-phase rectifier circuit modules 11, 12, and 13 are connected to each other using a delta connection (FIG. 1) or a star connection (FIG. 2). A delta connection (also called $\Delta$ connection) and a star connection (also called Y connection) are well-known connection methods in three-phase AC circuits. That is, a delta connection is a connection in which each phase of a U phase, a V phase, and a W phase is connected in the direction in which a phase voltage is applied so as to form a closed circuit. In a delta connection, the line voltage is equal to the phase voltage, and the line current is equal to $\sqrt{3}$ times the phase current. A star connection is a connection that connects each phase of the U phase, the V phase, and the W phase at a neutral point N at one end thereof. In a star connection, the line voltage is equal to $\sqrt{3}$ times the phase voltage, and the line current is equal to the phase current.

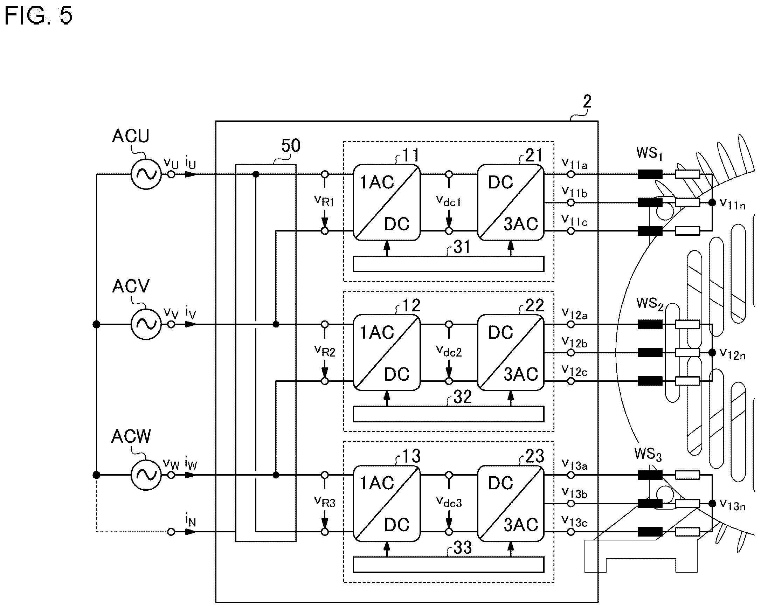

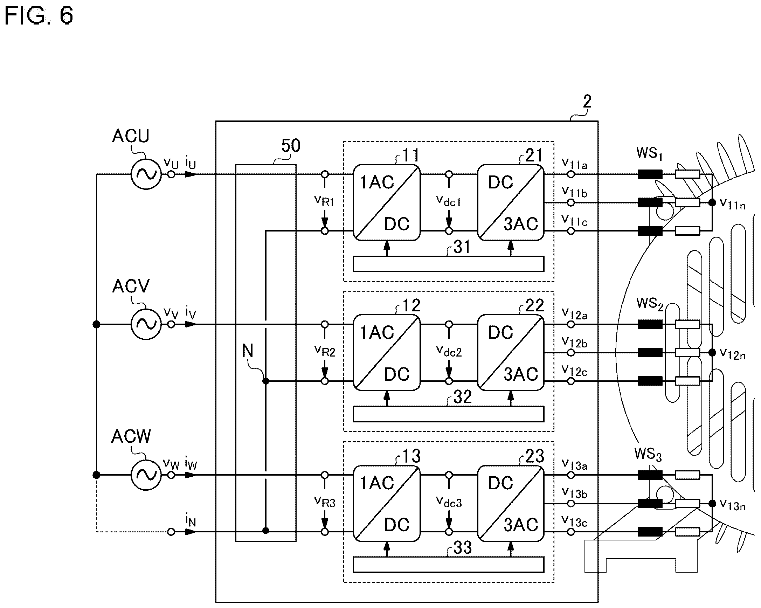

DC links $v_{dc1}$, $v_{dc2}$, and $v_{dc3}$ are provided on the downstream side of the single-phase rectifier circuit modules 11, 12, and 13, respectively (see FIGS. 5 and 6).

The inverter circuit module 21 converts a DC voltage $v_{dc1}$ converted by the single-phase rectifier circuit module 11 into three-phase AC output voltages $v_{11a}$, $v_{11b}$, and $v_{11c}$. The inverter circuit module 22 converts a DC voltage $v_{dc2}$ converted by the single-phase rectifier circuit module 12 into three-phase AC output voltages $v_{12a}$, $v_{12b}$, and $v_{12c}$. The inverter circuit module 21 converts a DC voltage $v_{de3}$ converted by the single-phase rectifier circuit module 13 into three-phase AC output voltages $v_{13a}$, $v_{13b}$, and $v_{13c}$. The three-phase AC output voltages $v_{11a}$, $v_{11b}$, and $v_{11c}$ are supplied to a first winding $WS_1$ of a three-phase motor. The three-phase AC output voltages $v_{12a}$, $v_{12b}$, and $v_{12c}$ are supplied to a second winding $WS_2$ of the three-phase motor. The three-phase AC output voltages $v_{13a}$, $v_{13b}$, and $v_{13c}$ are supplied to a first winding $WS_3$ of the three-phase motor. In this way, the three-phase motor is driven by three-phase output supplied to the first, second, and third windings $WS_1$, $WS_2$, and $WS_3$.

The controllers 31, 32, and 33 control respective switching elements constituting the single-phase rectifier circuit modules 11, 12, and 13 and the inverter circuit modules 21, 22, and 23 such that when any one of the single-phase rectifier circuit modules 11, 12, and 13 fails, the remaining single-phase rectifier circuit modules and the inverter circuit modules evenly output three-phase AC output power.

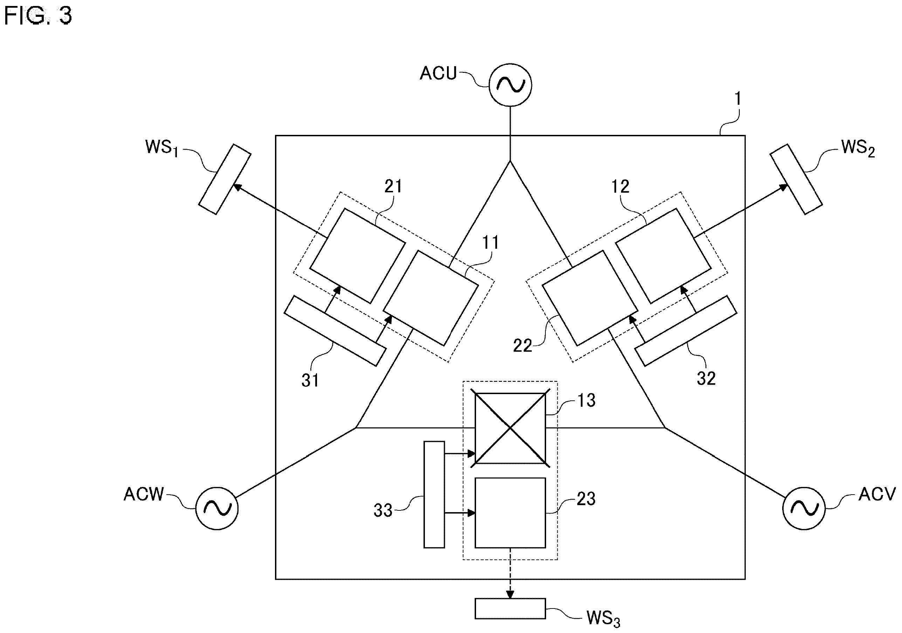

FIG. 3 is a diagram showing a state when one of the single-phase rectifier circuit modules, that is the single-phase rectifier circuit module 13, fails in the AC-AC converter of FIG. 1. Before the failure of the single-phase rectifier circuit module 13, it is assumed that the single-phase rectifier circuit modules 11, 12, and 13 each evenly output one-third of the three-phase AC output power. When the single-phase rectifier circuit module 13 fails, the controllers 31, 32, and 33 control the switching elements constituting the single-phase rectifier circuit modules 11, 12, and 13 and the inverter circuit modules 21, 22, and 23 such that the remaining single-phase rectifier circuit modules 11 and 12 and the inverter circuit modules 21 and 22 each evenly output 1/2 of three-phase AC output power. At this time, although the third winding

$WS_3$ of the motor does not operate, the output to the remaining windings $WS_1$ and $WS_2$ increases from 1/3 to 1/2, and the total output of the motor therefore does not change. As shown in FIG. 3, since the single-phase rectifier circuit modules 11, 12, and 13 are connected to one another by using a delta connection, even when the single-phase rectifier circuit module 13 fails, the three-phase AC output power is output without the influence of this failure affecting the remaining single-phase rectifier circuit modules 11 and 12, and the motor can continue to be driven in a fault tolerant manner.

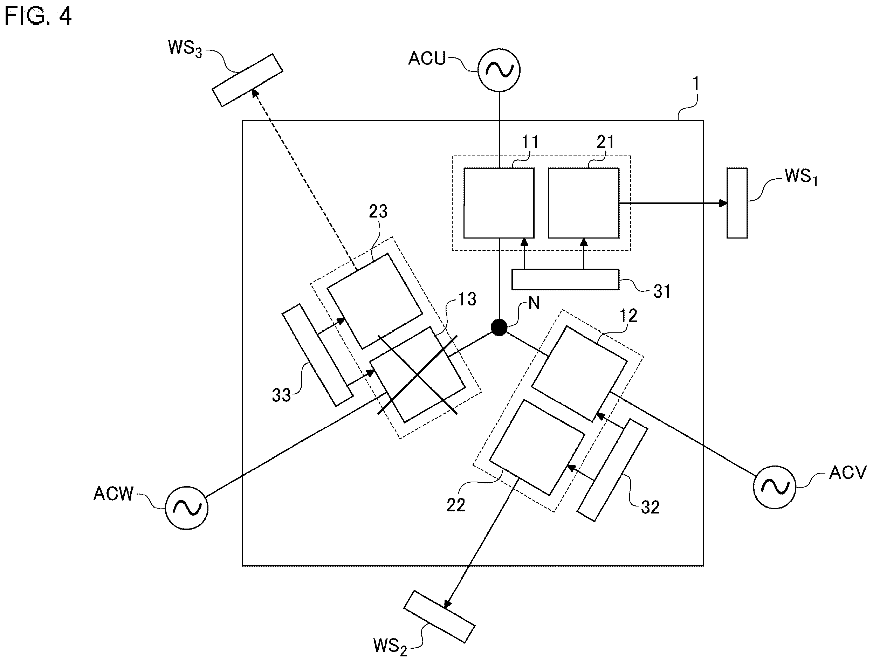

FIG. 4 is a diagram showing a state when one of the single-phase rectifier circuit modules, that is the single-phase rectifier circuit module 13, fails in the AC-AC converter of FIG. 2. Before the failure of the single-phase rectifier circuit module 13, it is assumed that the single-phase rectifier circuit modules 11, 12, and 13 each evenly output one-third of the three-phase AC output power. When the single-phase rectifier circuit module 13 fails, the controllers 31, 32, and 33 control the switching elements constituting the single-phase rectifier circuit modules 11, 12, and 13 and the inverter circuit modules 21, 22, and 23 such that the remaining single-phase rectifier circuit modules 11 and 12 and the inverter circuit modules 21 and 22 each evenly output 1/2 of three-phase AC output power. At this time, although the third winding $WS_3$ of the motor does not operate, the output to the remaining windings $WS_1$ and $WS_2$ increases from 1/3 to 1/2, and the total output of the motor therefore does not change. As shown in FIG. 4, since the single-phase rectifier circuit modules 11, 12, and 13 are connected to one another by using a star connection, even when the single-phase rectifier circuit module 13 fails, the three-phase AC output power is output without the influence of this failure affecting the remaining single-phase rectifier circuit modules 11 and 12, and the motor can continue to be driven in a fault tolerant manner.

As explained above, it is possible to achieve a miniaturized and densified fault tolerant motor drive system.

In the above-described embodiment, the number of single-phase rectifier circuit modules and the number of inverter circuit modules are both three. However, the numbers are not limited to this, and the number of the rectifier circuit modules and the number of the inverter circuit modules may be any multiple of three as long as the numbers are the same. For example, when there are six (3 × 2) rectifier circuit modules and inverter circuit modules, two sets of delta connections or star connections can be formed, and when there are nine (3 × 3) rectifier circuit modules and inverter circuit modules, three sets of delta connections or star connections can be formed.

In the above embodiment, three controllers 31, 32, and 33 are provided, and these controllers individually control the single-phase rectifier circuit modules 11, 12, and 13, respectively, and the inverter circuit modules 21, 22, and 23, respectively. However, the present invention is not limited to this, and for example, one controller may collectively control the single-phase rectifier circuit modules 11, 12, and 13 and the inverter circuit modules 21, 22, and 23.

[Second Embodiment]

FIGS. 5 and 6 are functional block diagrams of an AC-AC converter 2 according to the second embodiment. The AC-AC converter 2 includes a switching unit 50 in addition to the features of the AC-AC converter 1 shown in FIGS. 1 and 2. Since the other features of the AC-AC converter 2 are the same as those of the AC-AC converter 1, duplicate explanations will be omitted.

The switching unit 50 switches between the delta connection and the star connection of the single-phase rectifier circuit modules 11, 12, and 13. The switching unit 50 may be, for example, an automatic switch or a manual switch. FIG. 5 shows the AC-AC converter 2 when the connection is switched to the delta connection by the switching unit 50. FIG. 6 shows the AC-AC converter 2 when the connection is switched to the star connection by the switching unit 50.

According to the present embodiment, the connection of the single-phase rectifier circuit modules can be freely switched between the delta connection and the star connection in accordance with the magnitude of the input voltage and the application.

[Third Embodiment]

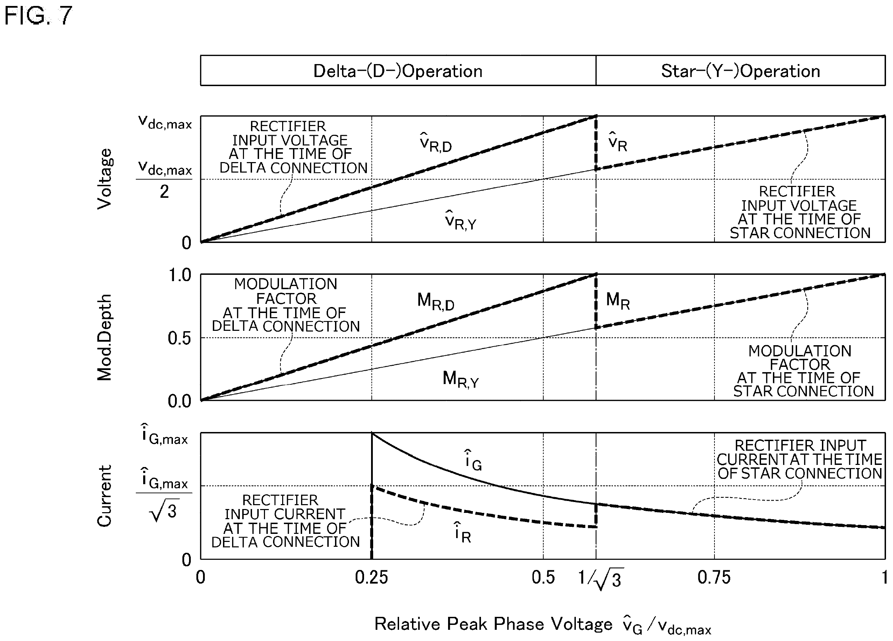

The top graph in FIG. 7 is a graph of a rectifier input voltage $v_R$ with respect to a power supply voltage $v_G$ at the time of the delta connection and at the time of the star connection. However, the power supply voltage on the horizontal axis is expressed using a ratio $v_{G/Vde,max}$ to the maximum value $v_{dc,max}$ of the DC link voltage (the same applies hereinafter). The middle graph in FIG. 7 is a graph of a modulation factor $M_R$ with respect to the power supply voltage $v_G$ at the time of the delta connection and at the time of the star connection. The modulation factor $M_R$ is defined as the ratio between a rectifier input peak voltage $v_R$ and a DC link voltage $v_{dc}$ as follows:

$$M_R = v_R / v_{dc}$$

The bottom graph in FIG. 7 is a graph of a rectifier input current $i_R$ with respect to the power supply voltage $v_G$ at the time of the delta connection and at the time of the star connection.

In the case of the delta connection, the rectifier input voltage is equal to the line voltage. Therefore, a rectifier input voltages $v_{R,D}$ is $\sqrt{3}$ times the power supply voltage $v_G$ (hereinafter, D on the right side of the subscript represents a delta connection and Y represents a star connection) as follows:

$$v_{R,D} = \sqrt{3}v_G$$

Therefore, a modulation factor $M_{R,D}$ at the time of the delta connection is as follows:

$$M_{R,D} = \sqrt{3}v_G / v_{dc}$$

In the case of the star connection, the rectifier input voltage is equal to the line voltage. Therefore, the following is established:

$$v_{R,Y} = v_G$$

A modulation factor $M_{R,Y}$ is as follows:

$$M_{R,Y} = v_G / v_{dc}$$

As shown in FIG. 7, when the power supply voltage is small, it is more advantageous to use the delta connection than to use the star connection in that a high rectifier input voltage can be obtained. On the other hand, when the power supply voltage is high, since the rectifier input voltage becomes too high, it is more advantageous to use the star connection than to use the delta connection. In particular, if the delta connection is used when the power supply voltage $v_G$ is $1/\sqrt{3}$ or more ($v_G/v_{dc,max} \geqq 1/\sqrt{3}$) of the maximum DC link voltage $v_{dc,max}$, it is necessary to design the maximum DC link voltage $v_{dc,max}$ to be $\sqrt{3}$ times the maximum power supply voltage or more, and it is thus necessary to use parts with high voltage resistance.

From the above, in the third embodiment, when the ratio between the power supply voltage $v_G$ and the maximum DC link voltage $v_{dc,max}$ of the DC link provided on the downstream side of the single-phase rectifier circuit module is denoted by R, the switching unit 50 switches the single-phase rectifier circuit modules 11, 12, and 13 to the delta connection when R is smaller than a predetermined value and switches the single-phase rectifier circuit modules 11, 12, and 13 to the star connection when R is equal to or more than the predetermined value.

According to the present embodiment, the connection of the single-phase rectifier circuit modules can be accurately switched between the delta connection and the star connection in accordance with the size of the power supply voltage.

In particular, the value of R may be in the range of $1/\sqrt{3} \pm 5\%$. This allows for the selection of an accurate R while having a margin of $\pm 5\%$.

In particular, the value of R may be $1/\sqrt{3}$. Thereby, the optimum R can be selected.

[Fourth Embodiment]

In the fourth embodiment, the controllers 31, 32, and 33 control switching elements constituting the single-phase rectifier circuit modules 11, 12, and 13 and the inverter circuit modules 21, 22, and 33 such that the phase of a three-phase input current that is input from the three-phase AC power supply and the phase of the three-phase AC voltage match while keeping the DC voltage constant.

The control of the single-phase rectifier circuit modules 11, 12, and 13 and the inverter circuit modules 21, 22, and 33 performed by the controllers 31, 32, and 33 as described allows for the absorption of the pulsation of power produced by the DC voltages generated by the single-phase rectifier circuit modules 11, 12, and 13. That is, according to the present embodiment, since the rectifier circuit 100 can be used as a PFC rectifier circuit, control with a power factor of 1 can be realized.

[Fifth Embodiment]

In the fifth embodiment, the controllers 31, 32, and 33 calculate target capacitor power based on the difference between the DC link voltage and a target link voltage, calculate target motor power by subtracting the target capacitor power from target DC power, and control the switching elements constituting the single-phase rectifier circuit modules 11, 12, and 13 and the inverter circuit modules 21, 22, and 23 such that the pulsation of the three-phase AC power related to the three-phase AC input voltage and the pulsation of the DC power related to the DC voltage are absorbed based on the target capacitor power and the target motor power. According to this embodiment, the power pulsation can be absorbed without using a large-capacity DC link capacitor.

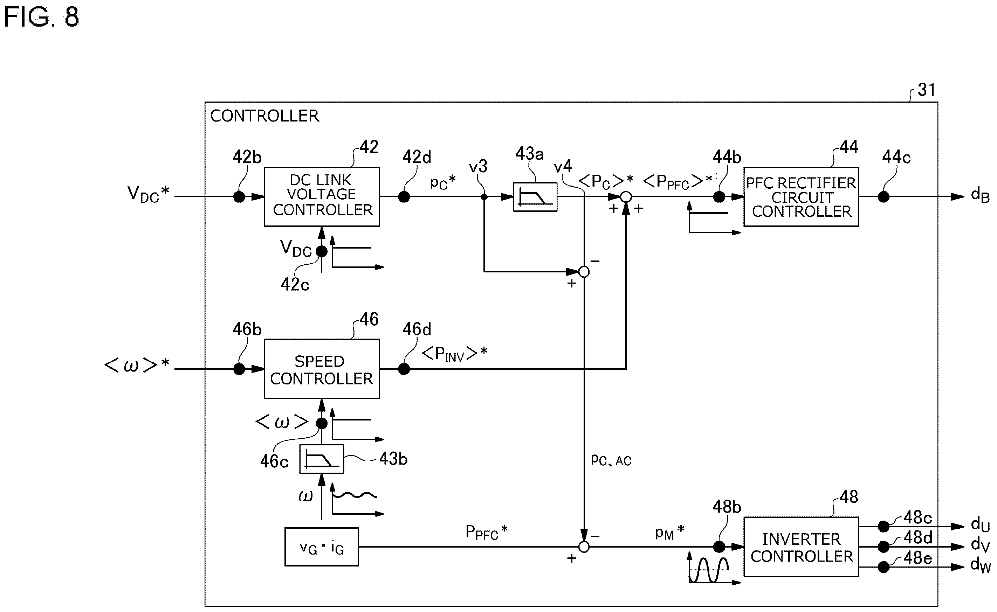

Hereinafter, the configuration and operation of the controllers 31, 32, and 33 in the fifth embodiment will be described in detail with reference to FIG. 8. FIG. 8 is a detailed functional block diagram of the controller 31 (although FIG. 8 shows the controller 31 as a representative of the controllers 31, 32, and 33, the same applies to the controllers 32 and 33). The controller 31 includes a DC link voltage controller 42, a rectifier circuit controller 44, a speed controller 46, and an inverter controller 48. The controller 31 controls the switching elements constituting the single-phase rectifier circuit module 11 and the inverter circuit module 21 so as to adjust the generated DC voltage and the three-phase AC voltage.

The DC link voltage controller 42 includes a first input terminal 42b, a second input terminal 42c, and an output terminal 42d. The rectifier circuit controller 44 includes an input terminal 44b and an output terminal 44c. The speed controller 46 includes a first input terminal 46b, a second input terminal 46c, and an output terminal 46d. The inverter controller 48 includes an input terminal 48b, a first output terminal 48c, a second output terminal 48d, and a third output terminal 48e. The controller 31 includes a low pass filter 43a between the output terminal 42d of the DC link voltage controller 42 and the input terminal 44b of the rectifier circuit controller 44. The controller 31 includes a low pass filter 43b on the upstream side of the second input terminal 46c of the speed controller 46.

A target DC link voltage $v_{DC}^*$ is input to the first input terminal 42b of the DC link voltage controller 42. The current DC link voltage $v_{DC}$ is input to the second input terminal 42c. The DC link voltage controller 42 obtains target capacitor power $p_c^*$ based on the difference $\Delta v_{DC}$ (not shown) between $v_{DC}^*$ and $v_{DC}$ and outputs the difference from the output terminal 42d.

The target capacitor power $P_C^*$ that is output from the output terminal 42d of the DC link voltage controller 42 is branched into two at a branch point v3, and one is input to the low pass filter 43a. The low pass filter 43a absorbs high frequency components from $P_C^*$ to generate a target average capacitor power $<P_C>^*$ and outputs the target average capacitor power $<P_C>^*$. $<P_C>^*$ output from the low pass filter 43a is branched into two at a branch point v4, and one is added to the target average inverter output $<P_{INV}>^*$ output from the output terminal 46d of the speed controller 46. As a result, a target average rectified power $<P_{PFC}>^*$ is calculated as $<P_{PFC}>^* = <P_C>^* + <P_{INV}>^*$. The calculated $<P_{PFC}>^*$ is input to the input terminal 44b of the rectifier circuit controller 44. The other $<P_C>^*$ branched at the branch point v4 is subtracted from the other $P_C^*$ branched at the branch point v3, and an input power pulsation $p_{C,AC}$ is generated. In other words, the input power pulsation $p_{C,AC}$ is obtained by extracting only the pulsation part from the target capacitor power $P_C^*$. The input power pulsation $p_{C,AC}$ is subtracted from target rectified power $p_{PFC}^*$ so as to calculate target motor power $P_M^*$ ($P_M^* = P_{PFC}^* - p_{C,AC}$). The $p_M^*$ that has been calculated is input to the input terminal 48b of the inverter controller 48.

As described above, the target motor power $p_M^*$ that is input to the inverter controller 48 is obtained by subtracting the input power pulsation $p_{C,AC}$ from the target rectified power $p_{PFC}^*$. In other words, the pulsation $\Delta p_{DC}$ of the DC link is input to the three-phase motor 600. The three-phase motor 600 compensates for this pulsation by the inertia possessed by a load connected to the three-phase motor 600. As a result, the pulsation of the DC link is absorbed, and $p_M = p_G$ is established. In other words, the motor power $p_M$ agrees with the input power $p_G$.

The speed $\omega$ of the three-phase motor 600 pulsates at the frequency $2f_g$, which is twice the frequency $f_G$ of the input power $p_G$, due to compensation of the input power $p_G$ by the three-phase motor 600. Accordingly, high frequency components of $\omega$ are removed using a low pass filter as shown in the following. The current motor speed $\omega$ is input to the low pass filter 43b. The low pass filter 43b removes the high frequency components from $\omega$ to generate the current average speed $<\omega>$ of the motor and inputs the current average speed to the second input terminal 46c of the speed controller 46. A target average speed $<\omega>^*$ of the three-phase motor 600 is input to the first input terminal 46b of the speed controller 46. The speed controller 46 obtains target average inverter output $<P_{INV}>^*$ based on the difference $\Delta\omega$ (not shown) between $<\omega>^*$ and $<\omega>$ and outputs the target average inverter output $<P_{INV}>^*$ from the output terminal 46d.

The rectifier circuit controller 44 controls the rectifier circuit 10 so as to keep the DC link voltage $v_{DC}$ constant by feedforward. The target average inverter output $<P_{INV}>^*$ that has been output from the output terminal 46d of the speed controller 46 is added to the target average capacitor power $<P_C>^*$ that has been output from the low pass filter 43a. As a result, the target average rectified power $<P_{PFC}>^*$ is calculated as $<P_{PFC}>^* = <P_C>^* + <P_{INV}>^*$. The calculated $<P_{PFC}>^*$ is input to the input terminal 44b of the rectifier circuit controller 44. The rectifier circuit controller 44 calculates a target input current $i_G^*$ (not shown) based on the $<P_{PFC}>^*$ that has been input, obtains an output duty ratio $d_B$ from the inductor current difference, and outputs this from the output terminal 44c. The output duty ratio $d_B$ that has been output is input to the rectifier circuit 100 via a pulse width modulator (not shown) such that desired control is realized.

According to the present embodiment, the power pulsation can be absorbed by using the load of the motor by the controllers 31, 32, and 33 specifically configured as described above. This eliminates the need to use a large-capacity DC link capacitor and makes it possible to achieve the further miniaturization and densification of the entire motor drive system, reduce the cost, and extend the service life.

[Sixth Embodiment]

In the sixth embodiment, each of DC links $v_{dc1}$, $v_{dc2}$, and $v_{dc3}$ provided on the downstream side of the single-phase rectifier circuit modules 11, 12, and 13, respectively, includes a capacitor. These capacitors absorb the pulsation of the three-phase AC power related to the three-phase AC input voltage and the pulsation of the DC power related to the DC voltage.

In a typical example, when the rectifier circuit 103 operates at several kW and several 100V, the capacitance of these capacitors is of the order of mF.

According to the present embodiment, the power pulsation can be absorbed without providing a special controller.

[Seventh Embodiment]

In the seventh embodiment, the controllers 31, 32, and 33 control the switching elements constituting the single-phase rectifier circuit modules 11, 12, and 13, respectively, and the inverter circuit modules 21, 22, and 33, respectively, such that input power from the three-phase AC power supply is evenly distributed to all the single-phase rectifier circuit modules 11, 12, and 13. In other words, the single-phase rectifier circuit modules 11, 12, and 13 each evenly output one-third of the three-phase AC output power to the inverter circuit modules 21, 22, and 23. In this case, since the same amount of power is evenly supplied to the windings $WS_1$, $WS_2$, and $WS_3$ of the three-phase motor, the motor is driven smoothly.

According to the present embodiment, smooth motor drive can be realized.

[Eighth Embodiment]

In the eighth embodiment, the controllers 31, 32, and 33 control the switching elements constituting the single-phase rectifier circuit modules 11, 12, and 13, respectively, and the inverter circuit modules 21, 22, and 33, respectively, such that the input power from the three-phase AC power supply is evenly distributed to the single-phase rectifier circuit modules 11, 12, and 13 at different ratios. For example, the controllers 31, 32, and 33 may calculate the motor drive efficiency of each phase and obtain power distribution that allows the motor to be driven most efficiently. As a result, for example, 50%, 30%, and 20% of the input power are distributed to the single-phase rectifier circuit modules 11, 12, and 13, respectively, or 50%, 30%, and 0% are distributed, respectively (in this case, the input power is evenly distributed to the U-phase and V-phase modules, and the W-phase module is stopped).

According to the present embodiment, efficient motor drive can be realized.

[Ninth Embodiment]

In the ninth embodiment, the controllers 31, 32, and 33 calculate the power supply voltage of each phase of the three-phase AC power supply, and control the switching elements constituting the single-phase rectifier circuit modules 11, 12, and 13 and the inverter circuit modules 21, 22, and 33 such that the amount of power distributed to a single-phase rectifier circuit module corresponding to a phase with a high power supply voltage is larger than the amount of power distributed to a single-phase rectifier circuit module corresponding to a phase with a low power supply voltage. When there is imbalance between the phases of the power supply voltage, this compensates for the imbalance by supplying more power to a load corresponding to a phase with a high power supply voltage. As a result, the motor can be driven with optimum efficiency even when there is imbalance between the phases of the power supply voltage.

According to the present embodiment, efficient motor drive can be realized.

The above explanation is made based on the embodiments of the present invention. These embodiments are intended to be illustrative only, and it will be obvious to those skilled in the art that various modifications and changes can be developed within the scope of the claims of the present invention and that such modifications and changes are also within the scope of the claims of the present invention. Therefore, the descriptions and figures in the specification should be treated demonstratively instead of being treated in a limited manner.

Optional combinations of the aforementioned embodiment and exemplary variations will also be within the scope of the present invention, as defined by the appended claims.

1, 2 AC-AC converter,
11, 12, 13 single-phase rectifier circuit module,
21, 22, 23 inverter circuit module,
31, 32, 33 controller,
50 controller

**Claims**

1. An AC-AC converter (1) comprising:

    n single-phase rectifier circuit modules (11, 12, 13), where n is a multiple of three, that are configured to convert an AC voltage of each phase of a three-phase AC input voltage supplied from a three-phase AC power supply into a DC voltage;
    the same number of inverter circuit modules (21, 22, 23) as the single-phase rectifier circuit modules (11, 12, 13) that are each configured to convert the DC voltage into a three-phase AC output voltage; and
    controllers (31, 32, 33) that are configured to control switching elements constituting the single-phase rectifier circuit modules (11, 12, 13) and the inverter circuit modules (21, 22, 23), **characterized in that**
    the n single-phase rectifier circuit modules (11, 12, 13) being connected to one another using a delta connection or a star connection; and
    the controllers (31, 32, 33) are configured to control the switching elements such that when any one of the n single-phase rectifier circuit modules fails, the inverter circuit modules (21, 22, 23) connected to the remaining single-phase rectifier circuit modules (11, 12, 13) and to the one of the single-phase rectifier circuit modules (11, 12, 13) evenly output three-phase AC output voltage; and by a switching unit (50) that is configured to switch between the delta connection and the star connection of the single-phase rectifier circuit modules (11, 12, 13), in accordance with a magnitude of the AC input voltage.

2. The AC-AC converter (2) according to claim 1, **characterized in that** when the ratio between a power supply voltage of the three-phase AC power supply and the maximum DC link voltage of a DC link provided on the downstream side of the single-phase rectifier circuit modules is denoted by R, the switching unit (50) switches the single-phase rectifier circuit modules (11, 12, 13) to the delta connection when R is smaller than a predetermined value and switches the single-phase rectifier circuit modules (11, 12, 13) to the star connection when R is equal to or more than the predetermined value.

3. The AC-AC converter (2) according to claim 2, **characterized in that** the value of R is in the range of $1/\sqrt{3} \pm 5\%$.

4. The AC-AC converter (2) according to claim 3, **characterized in that** the value of R is $1/\sqrt{3}$.

5. The AC-AC converter (1) according to any one of claims 1 through 4, **characterized in that** the controllers (31, 32, 33) are configured to control the switching elements constituting the single-phase rectifier circuit modules (11, 12, 13) and the inverter circuit modules (21, 22, 23) such that the phase of a three-phase input current that is input from the three-phase AC power supply and the phase of the three-phase AC input voltage match while keeping the DC voltage constant.

6. The AC-AC converter (1) according to claim 5, **characterized in that** the controllers (31, 32, 33) are configured to calculate a target capacitor power based on a difference between a DC link voltage and a target DC link voltage ($V_{DC}{}^*$), calculate a target motor power for outputting power to an external motor by subtracting the target capacitor power from a target DC power, and control the switching elements constituting the single-phase rectifier circuit modules (11, 12, 13) and the inverter circuit modules (21, 22, 23) such that a pulsation of three-phase AC power related to the three-phase AC input voltage and a pulsation of DC power related to the DC voltage are absorbed by using a load of the external motor based on the target capacitor power and the target motor power.

7. The AC-AC converter (1) according to claim 6, **characterized in that**

the DC link includes a capacitor, and
the capacitor is configured to absorb the pulsation of the three-phase AC power related to the three-phase AC input voltage and the pulsation of the DC power related to the DC voltage.

8. The AC-AC converter (1) according to any one of claims 1 through 7, **characterized in that** the controllers (31, 32, 33) are configured to control the switching elements constituting the single-phase rectifier circuit modules (11, 12, 13) and the inverter circuit modules (21, 22, 23) such that input power from the three-phase AC power supply is evenly distributed to all the single-phase rectifier circuit modules (11, 12, 13).

9. The AC-AC converter (1) according to any one of claims 1 through 7, **characterized in that** the controllers (31, 32, 33) are configured to control the switching elements constituting the single-phase rectifier circuit modules (11, 12, 13) and the inverter circuit modules (21, 22, 23) such that input power from the three-phase AC power supply is distributed to the single-phase rectifier circuit modules (11, 12, 13) at different ratios.

10. The AC-AC converter (1) according to any one of claims 1 through 7, **characterized in that** the controllers (31, 32, 33) are configured to calculate the power voltage of each phase of the three-phase AC power supply and control the switching elements constituting the single-phase rectifier circuit modules (11, 12), 13) and the inverter circuit modules (21, 22, 23) such that the amount of power distributed to the single-phase rectifier circuit modules (11, 12, 13) that correspond to a phase with a high power supply voltage is larger than the amount of power distributed to the single-phase rectifier circuit modules (11, 12, 13) that correspond to a phase with a low power supply voltage.

**Patentansprüche**

1. Ein AC-AC-Wandler (1) weist auf: n einphasige Gleichrichter-Schaltungsmodule (11, 12, 13), wobei n ein Vielfaches von drei ist, die so konfiguriert sind, dass sie eine Wechselspannung jeder Phase einer dreiphasigen Eingangswechselspannung, die von einer dreiphasigen Wechselstromversorgung geliefert wird, in eine Gleichspannung umwandeln; die gleiche Anzahl von Wechselrichter-Schaltungsmodulen (21, 22, 23) wie die einphasigen Gleichrichter-Schaltungsmodule (11, 12, 13), die jeweils so konfiguriert sind, dass sie die Gleichspannung in eine dreiphasige Ausgangswechselspannung umwandeln; und Steuereinheiten (31, 32, 33), die zur Steuerung von Schaltelementen, die die einphasigen Gleichrichter-Schaltungsmodule (11, 12, 13) und die Wechselrichter-Schaltungsmodule (21, 22, 23) bilden, ausgebildet sind,
**dadurch gekennzeichnet, dass**
die n einphasigen Gleichrichter-Schaltungsmodule (11, 12, 13) über eine Dreieck-Schaltung oder eine Stern-Schaltung miteinander verbunden sind; und die Steuereinheiten (31, 32, 33) so konfiguriert sind, dass sie die Schaltelemente so steuern, dass, wenn eines der n einphasigen Gleichrichter-Schaltungsmodule ausfällt, die Wechselrichter-Schaltungsmodule (21, 22, 23), die mit den verbleibenden einphasigen Gleichrichter-Schaltungsmodulen (11, 12, 13) und mit dem einen der einphasigen Gleichrichter-Schaltungsmodule (11, 12, 13) verbunden sind, gleichmäßig eine dreiphasige Ausgangswechselspannung ausgeben; und durch eine Schalteinheit (50), die so konfiguriert ist, dass sie zwischen der Dreieck-Schaltung und der Stern-Schaltung der Einphasen-Gleichrichter-Schaltungsmodule (11, 12, 13) in Übereinstimmung mit einer Größe der Eingangswechselspannung umschaltet.

2. Der AC-AC-Wandler (2) nach Anspruch 1, **dadurch gekennzeichnet, dass**, wenn das Verhältnis zwischen einer Versorgungsspannung der dreiphasigen Wechselstromversorgung und der maximalen DC-Zwischenkreisspannung einer DC-Verbindung, die auf der stromabwärts gelegenen Seite der einphasigen Gleichrichter-Schaltungsmodule vorgesehen ist, mit R bezeichnet wird, bezeichnet wird, die Schalteinheit (50) die einphasigen Gleichrichter-Schaltungsmodule (11, 12, 13) auf die Dreieckschaltung schaltet, wenn R kleiner als ein vorbestimmter Wert ist, und die einphasigen Gleichrichter-Schaltungsmodule (11, 12, 13) auf die Sternschaltung schaltet, wenn R gleich oder größer als der vorbestimmte Wert ist.

3. Der AC-AC-Wandler (2) nach Anspruch 2, **dadurch gekennzeichnet, dass** der Wert von R im Bereich von $1/\sqrt{3} \pm 5\%$ liegt.

4. Der AC-AC-Wandler (2) nach Anspruch 3, **dadurch gekennzeichnet, dass** der Wert von R $1/\sqrt{3}$ beträgt.

5. Der AC-AC-Wandler (1) nach einem der Ansprüche 1 bis 4, **dadurch gekennzeichnet, dass** die Steuereinheiten (31, 32, 33) so konfiguriert sind, dass sie die Schaltelemente, die die einphasigen Gleichrichter-Schaltungsmodule (11, 12, 13) und die Wechselrichter-Schaltungsmodule (21, 22, 23) bilden, so steuern, dass die Phase eines dreiphasigen Eingangsstroms, der von der dreiphasigen Wechselstromversorgung eingegeben wird, und die Phase der dreiphasigen Eingangswechselspannung übereinstimmen, während die Gleichspannung konstant gehalten wird.

6. Der AC-AC-Wandler (1) nach Anspruch 5, **dadurch gekennzeichnet, dass** die Steuereinheiten (31, 32, 33) so konfiguriert sind, dass sie eine Soll-Kondensatorleistung auf der Basis einer Differenz zwischen einer Zwischenkreisspannung und einer Soll-Zwischenkreisspannung (VDC*) berechnen, eine Ziel-Motorleistung zur Abgabe von Leistung an einen externen Motor berechnen, indem sie die Soll-Kondensatorleistung von einer Soll-Gleichstromleistung subtrahieren, und die Schaltelemente, die die einphasigen Gleichrichter-Schaltungsmodule (11, 12, 13) und die Wechselrichter-Schaltungsmodule (21, 22, 23) bilden, so zu steuern, dass eine Pulsation der Dreiphasen-Wechselstromleistung, die mit der Dreiphasen-Wechselstrom-Eingangsspannung zusammenhängt, und eine Pulsation der Gleichstromleistung, die mit der Gleichspannung zusammenhängt, durch Verwendung einer Last des externen Motors auf der Basis der Ziel-Kondensatorleistung und der Ziel-Motorleistung absorbiert werden.

7. Der AC-AC-Wandler (1) nach Anspruch 6, **dadurch gekennzeichnet, dass** die DC-Verbindung einen Kondensator aufweist, und der Kondensator so konfiguriert ist, dass er die Pulsation der dreiphasigen AC-Leistung in Bezug auf die dreiphasige AC-Eingangsspannung und die Pulsation der DC-Leistung in Bezug auf die DC-Spannung absorbiert.

8. Der AC-AC-Wandler (1) nach einem der Ansprüche 1 bis 7, **dadurch gekennzeichnet, dass** die Steuereinheiten (31, 32, 33) so konfiguriert sind, dass sie die Schaltelemente, die die einphasigen Gleichrichter-Schaltungsmodule (11, 12, 13) und die Wechselrichter-Schaltungsmodule (21, 22, 23) bilden, so steuern, dass die Eingangsleistung der dreiphasigen Wechselstromversorgung gleichmäßig auf alle einphasigen Gleichrichter-Schaltungsmodule (11, 12, 13) verteilt wird.

9. Der AC-AC-Wandler (1) nach einem der Ansprüche 1 bis 7, **dadurch gekennzeichnet, dass** die Steuereinheiten (31, 32, 33) so konfiguriert sind, dass sie die Schaltelemente, die die einphasigen Gleichrichter-Schaltungsmodule (11, 12, 13) und die Wechselrichter-Schaltungsmodule (21, 22, 23) bilden, so steuern, dass die Eingangsleistung aus der dreiphasigen Wechselstromversorgung in unterschiedlichen Verhältnissen auf die einphasigen Gleichrichter-Schaltungsmodule (11, 12, 13) verteilt wird.

10. Der AC-AC-Wandler (1) nach einem der Ansprüche 1 bis 7, **dadurch gekennzeichnet, dass** die Steuereinheiten (31, 32, 33) so konfiguriert sind, dass sie die Leistungsspannung jeder Phase der dreiphasigen Wechselstromversorgung berechnen und die Schaltelemente, die die einphasigen Gleichrichter-Schaltungsmodule (11, 12, 13) und die Wechselrichter-Schaltungsmodule (21, 22, 23) bilden, so zu steuern, dass die an die einphasigen Gleichrichter-Schaltungsmodule (11, 12, 13), die einer Phase mit hoher Versorgungsspannung entsprechen, verteilte Leistungsmenge größer ist als die an die einphasigen Gleichrichter-Schaltungsmodule (11, 12, 13), die einer Phase mit niedriger Versorgungsspannung entsprechen.

## Revendications

1. Convertisseur CA-CA (1) comprenant :

   n modules de circuits redresseurs monophasés (11, 12, 13), où n est un multiple de trois, qui sont configurés pour convertir une tension CA de chaque phase d'une tension d'entrée CA triphasée fournie par une alimentation CA triphasée en une tension CC ;
   un nombre identique de modules de circuits onduleurs (21, 22, 23) aux modules de circuits redresseurs monophasés (11, 12, 13) qui sont chacun configurés pour convertir la tension CC en une tension de sortie CA triphasée ; et
   des dispositifs de commande (31, 32, 33) qui sont configurés pour commander des éléments de commutation constituant les modules de circuits redresseurs monophasés (11, 12, 13) et les modules de circuits onduleurs (21, 22, 23), **caractérisé en ce que**
   les n modules de circuits redresseurs monophasés (11, 12, 13) sont connectés entre eux en utilisant une connexion en triangle ou une connexion en étoile ; et
   les dispositifs de commande (31, 32, 33) sont configurés pour commander les éléments de commutation de sorte que, lorsque l'un quelconque des n modules de circuits redresseurs monophasés est défaillant, les modules de circuits onduleurs (21, 22, 23) connectés aux modules de circuits redresseurs monophasés restants (11, 12, 13) et à l'un des modules de circuits redresseurs monophasés (11, 12, 13), délivrent en sortie de manière uniforme une tension de sortie CA triphasée ; et par
   une unité de commutation (50) qui est configurée pour commuter entre la connexion en triangle et la connexion en étoile des modules de circuits redresseurs monophasés (11, 12, 13), en fonction de l'amplitude de la tension d'entrée CA.

2. Convertisseur CA-CA (2) selon la revendication 1, **caractérisé en ce que**, lorsque le rapport entre une tension d'alimentation de l'alimentation CA triphasée et la tension maximale de liaison CC d'une liaison CC prévue sur le côté aval des modules de circuits redresseurs monophasés est noté R, l'unité de commutation (50) commute les modules de circuits redresseurs monophasés (11, 12, 13) vers la connexion en triangle lorsque R est inférieur à une valeur prédéterminée, et commute les modules de circuits redresseurs monophasés (11, 12, 13) vers la connexion en étoile lorsque R est supérieur ou égal à la valeur prédéterminée.

3. Convertisseur CA-CA (2) selon la revendication 2, **caractérisé en ce que** la valeur de R se trouve dans la plage de $1/\sqrt{3} \pm 5\%$.

4. Convertisseur CA-CA (2) selon la revendication 3, **caractérisé en ce que** la valeur de R est égale à $1/\sqrt{3}$.

5. Convertisseur CA-CA (1) selon l'une quelconque des revendications 1 à 4, **caractérisé en ce que** les dispositifs de commande (31, 32, 33) sont configurés pour commander les éléments de commutation constituant les modules de circuits redresseurs monophasés (11, 12, 13) et les modules de circuits onduleurs (21, 22, 23), de sorte que la phase d'un courant d'entrée triphasé qui est entré par l'alimentation CA triphasée et la phase de la tension d'entrée CA triphasée coïncident, tout en maintenant constante la tension CC.

6. Convertisseur CA-CA (1) selon la revendication 5, **caractérisé en ce que** les dispositifs de commande (31, 32, 33) sont configurés pour calculer une puissance cible de condensateur sur la base d'une différence entre une tension de liaison CC et une tension de liaison CC cible ($V_{DC}$*), calculer une puissance cible de moteur pour délivrer en sortie de la puissance à un moteur externe en soustrayant la puissance cible de condensateur d'une puissance CC cible, et commander les éléments de commutation constituant les modules de circuits redresseurs monophasés (11, 12, 13) et les modules de circuits onduleurs (21, 22, 23) de sorte qu'une pulsation de puissance CA triphasée liée à la tension d'entrée CA triphasée et qu'une pulsation de puissance CC liée à la tension CC soient absorbées en utilisant une charge du moteur externe, sur la base de la puissance cible de condensateur et de la puissance cible de moteur.

7. Convertisseur CA-CA (1) selon la revendication 6, **caractérisé en ce que**

   la liaison CC comprend un condensateur, et
   le condensateur est configuré pour absorber la pulsation de la puissance CA triphasée liée à la tension d'entrée CA triphasée et la pulsation de la puissance CC liée à la tension CC.

8. Convertisseur CA-CA (1) selon l'une quelconque des revendications 1 à 7, **caractérisé en ce que** les dispositifs de commande (31, 32, 33) sont configurés pour commander les éléments de commutation constituant les modules de circuits redresseurs monophasés (11, 12, 13) et les modules de circuits onduleurs (21, 22, 23) de sorte que la puissance d'entrée provenant de l'alimentation CA triphasée soit répartie uniformément entre tous les modules de circuits redresseurs monophasés (11, 12, 13).

**9.** Convertisseur CA-CA (1) selon l'une quelconque des revendications 1 à 7, **caractérisé en ce que** les dispositifs de commande (31, 32, 33) sont configurés pour commander les éléments de commutation constituant les modules de circuits redresseurs monophasés (11, 12, 13) et les modules de circuits onduleurs (21, 22, 23) de sorte que la puissance d'entrée provenant de l'alimentation CA triphasée soit répartie entre les modules de circuits redresseurs monophasés (11, 12, 13) selon des rapports différents.

**10.** Convertisseur CA-CA (1) selon l'une quelconque des revendications 1 à 7, **caractérisé en ce que** les dispositifs de commande (31, 32, 33) sont configurés pour calculer la tension de puissance de chaque phase de l'alimentation CA triphasée et commander les éléments de commutation constituant les modules de circuits redresseurs monophasés (11, 12, 13) et les modules de circuits onduleurs (21, 22, 23) de sorte que la quantité de puissance répartie entre les modules de circuits redresseurs monophasés (11, 12, 13) qui correspondent à une phase présentant une tension d'alimentation élevée soit supérieure à la quantité de puissance répartie entre les modules de circuits redresseurs monophasés (11, 12, 13) qui correspondent à une phase présentant une tension d'alimentation faible.

FIG. 1

EP 3 993 247 B1

13

FIG. 2

FIG. 3

FIG. 4

EP 3 993 247 B1

16

FIG. 5

FIG. 6

FIG. 7

| Delta-(D-)Operation | Star-(Y-)Operation |

Relative Peak Phase Voltage $\hat{v}_G / v_{dc,max}$

EP 3 993 247 B1

FIG. 8

EP 3 993 247 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008055947 A1
- US 2008012538 A1
- EP 3048718 A1
- JP 2012044830 A
- WO 2018025416 A1
- JP 2020137408 A

### Non-patent literature cited in the description

- **M. GUACCI ; D. BORTIS ; J.W. KOLAR**. High-Efficiency Weight-Optimized Fault-Tolerant Modular Multi-Cell Three-Phase GaN Inverter for Next Generation Aerospace Applications. *Proc. of IEEE Energy Conversion Congress and Application (ECCE-USA), Portland, OR, USA*, September 2018, 1334-1341

- **JOHN C.SALMON**. Reliable 3-Phase PWM Boost Rectifiers Employing a Stacked Dual Boost Converter Subtopology. *IEEE Transactions on Industry Applications*, 01 May 1996, vol. 32 (3), 542-551
- **N. MOTOKI et al.** Single-Phase to Three-Phase Electrolytic Capacitor-Less Dual Inverter-Fed IPMSM for Suppress Torque Pulsation. *IEEE Transactions on Industry Applications*, 10 June 2020, vol. 68 (8), 6537-6546